# EUROPEAN PATENT APPLICATION

(11) **EP 4 831 220 A1**
(43) Date of publication of application: **28.10.2026**
(21) Application number: 25790520.8
(22) Date of filing: 12.02.2025
(51) Int. Cl.: C08G 61/02, C08L 65/00, C09D 165/00, C09D 7/20, C09D 163/00

(54) **RESIN COMPOSITION AND COATING COMPOSITION COMPRISING SAME**

(30) Priority: 19.04.2024 KR 20240052819
(71) Applicant: Kolon Industries, Inc., Seoul 07793 (KR)
(72) Inventor: SUNG, Jong Un, Seoul 07793 (KR); KIM, Yu Sung, Seoul 07793 (KR); KIM, Sang Hun, Seoul 07793 (KR); PARK, Kyong Kook, Seoul 07793 (KR)
(74) Representative: Vossius & Partner Patentanwälte Rechtsanwälte mbB
(86) International application number: PCT/KR2025/002060
(87) International publication number: WO 2025/220860

(57) **Abstract**

The present disclosure provides a resin composition and a coating composition including the resin composition, the resin composition including a polymer including a unit (a) derived from a vinylbenzene-based monomer, a unit (b) derived from a phenol-based monomer, and a unit (c) derived from a catechol-based compound, wherein the vinylbenzene-based monomer includes a divinylbenzene-based monomer. The coating composition including the resin composition may exhibit excellent chemical resistance, water resistance, and adhesion.

## Description

### Technical Field

This application claims the benefit of priority to Korean Patent Application No. 10-2024-0052819, filed on April 19, 2024, the entire contents of which are incorporated herein by reference.

The present disclosure relates to a resin composition and a coating composition including the same.

### Background Art

Epoxy resins generally exhibit excellent adhesion, high corrosion resistance, and high chemical resistance, and therefore are among the most widely used resins in marine coatings, heavy-duty coatings, and a wide range of industrial applications. In particular, to protect structures in harsh environments, marine coatings and heavy-duty coatings must not only withstand corrosive conditions, but also provide excellent stability and ease of maintenance.

In general, liquid BPA epoxy resins prepared by a polycondensation reaction of bisphenol A with epichlorohydrin (ECH) are widely used, and the molar ratio of bisphenol A to ECH is adjusted to provide products suited to particular applications in terms of molecular weight and epoxy equivalent weight.

The performance of marine coatings and heavy-duty coatings is greatly affected by the properties of the diluents blended therein. Various non-reactive components have conventionally been added as diluents for heavy-duty epoxy coatings, including alkylphenol compounds such as nonylphenol, dodecylphenol, and octylphenol, C₅-C₉ hydrocarbon resins, and oligomers of phenol and α-methylstyrene.

In particular, the alkylphenol compounds have been widely used as additives or surfactants in heavy-duty epoxy coatings where plasticizing properties are required. However, because the alkylphenol compounds are known to exhibit renal toxicity and endocrine-disrupting properties, their use is currently banned or increasingly restricted worldwide.

Furthermore, in a recent evaluation of hazardous environmental substances by the European Chemicals Agency (ECHA), the possibility that alpha-methylstyrenated phenol substances in phenol resins may be classified as substances of very high concern (SVHCs) is under review. In addition, customer demand for eco-friendly products is gradually increasing.

Accordingly, there is a growing need to develop new non-reactive diluents based on new raw materials.

### [Prior Art Documents]

(Patent Document 1) Korean Patent Registration No. 10-1793736

### Disclosure of Invention

### Technical Problem

One objective of the present disclosure is to provide a resin composition having excellent chemical resistance, water resistance, and adhesion. Another objective of the present disclosure is to provide a coating composition including the resin composition.

### Solution to Problem

One aspect of the present disclosure relates to a resin composition including a polymer that includes a unit (a) derived from a vinylbenzene-based monomer including a divinylbenzene-based monomer; a unit (b) derived from a phenol-based monomer; and a unit (c) derived from a catechol-based compound.

Another aspect of the present disclosure relates to a coating composition including the resin composition.

### Advantageous Effects of Invention

The resin composition according to the present disclosure includes a polymer having a unit (c) derived from a catechol-based compound, and the polymer may therefore have a reduced average molecular weight and a reduced softening point. In addition, the inclusion of the unit (c) derived from the catechol-based compound may reduce the content of a self-polymerization product of the vinylbenzene-based monomer in the resin composition.

Accordingly, because the polymer in the resin composition may have a uniform molecular-weight distribution, a coating composition including the resin composition may exhibit improved chemical resistance, water resistance, and adhesion.

### Mode for the Invention

Hereinafter, various aspects and various embodiments of the present disclosure will be described in more detail.

The terms and words used in the present specification and the claims shall not be construed as being limited to their ordinary or dictionary meanings; rather, on the principle that an inventor may properly define the concept of a term in order to best describe his or her own invention, such terms and words shall be construed with meanings and concepts consistent with the technical concept of the present disclosure.

The terminology used herein is for the purpose of describing particular embodiments only and is not intended to limit the present disclosure. As used herein, the singular forms are intended to include the plural forms as well, unless the context clearly indicates otherwise. As used herein, the terms "comprise," "have," and the like are intended to specify the presence of stated features, numbers, steps, operations, components, parts, or combinations thereof set forth in the specification, but should be understood as not precluding the presence or addition of one or more other features, numbers, steps, operations, components, parts, or combinations thereof.

Specifically, a resin composition according to one aspect of the present disclosure includes a polymer including a unit (a) derived from a vinylbenzene-based monomer; a unit (b) derived from a phenol-based monomer; and a unit (c) derived from a catechol-based compound, wherein the vinylbenzene-based monomer may include a divinylbenzene-based monomer.

For example, when the polymer included in the resin composition includes the unit (c) derived from the catechol-based compound, the catechol-based compound may act as an inhibitor of self-polymerization of the vinylbenzene-based monomer. For example, the catechol-based compound may act as an inhibitor of self-polymerization of the divinylbenzene-based monomer included in the vinylbenzene-based monomer. Accordingly, the catechol-based compound may reduce self-polymerization of the vinylbenzene-based monomer, which is a side reaction, thereby reducing the content of a self-polymerization product of the vinylbenzene-based monomer in the resin composition. For example, the catechol-based compound may suppress the side reaction in which the divinylbenzene-based monomer polymerizes with itself, thereby reducing the content of a self-polymerization product of the divinylbenzene-based monomer in the resin composition.

For example, when the resin composition has a reduced content of a self-polymerization product of the vinylbenzene-based monomer, the polymer in the resin composition may have a reduced average molecular weight and a reduced softening point. In addition, the polymer in the resin composition may have a more uniform molecular-weight distribution. Accordingly, the resin composition including the polymer may be used as a diluent for a coating composition described below, and may improve the chemical resistance, water resistance, and adhesion of the coating composition.

In an embodiment, the unit (c) derived from the catechol-based compound may be disposed at a terminal end of the polymer. For example, the catechol-based compound may act as an inhibitor of self-polymerization of the vinylbenzene-based monomer and may be bonded to a terminal end of the polymer, thereby suppressing further side reactions. Accordingly, the polymer may have a reduced average molecular weight and a reduced softening point. In addition, the polymer in the resin composition may have a uniform molecular-weight distribution. Accordingly, the resin composition may be used as a diluent for a coating composition, and may improve the chemical resistance, water resistance, and adhesion of the coating composition.

In an embodiment, the catechol-based compound may be represented by Formula 1.

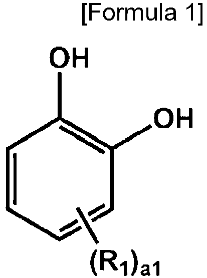

In Formula 1,
R₁ is hydrogen or an alkyl group having 1 to 15 carbon atoms, and a1 is an integer of 1 to 4.

In an embodiment, R₁ may be an alkyl group having 1 to 15 carbon atoms. For example, R₁ may be an alkyl group having 3 to 15 carbon atoms. For example, R₁ may be a tert-butyl group.

In an embodiment, the catechol-based compound may be represented by Formula 1-1 or Formula 1-2.

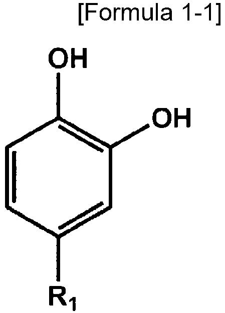

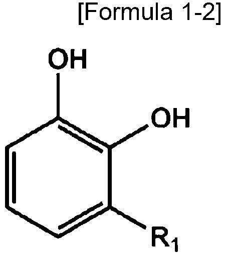

R₁ is hydrogen or an alkyl group having 1 to 15 carbon atoms.

In an embodiment, the catechol-based compound may be represented by Formula 1-1. For example, the catechol-based compound may include 4-tert-butylcatechol.

In an embodiment, the divinylbenzene-based monomer in the vinylbenzene-based monomer may be represented by any one of Formulas 2-1 to 2-3.

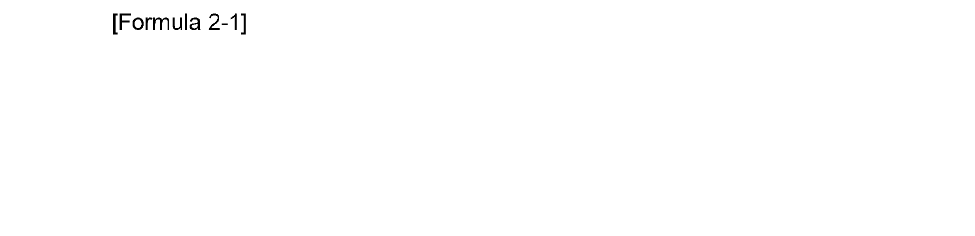

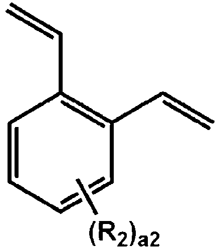

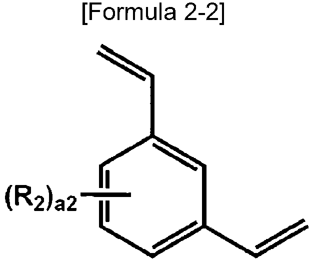

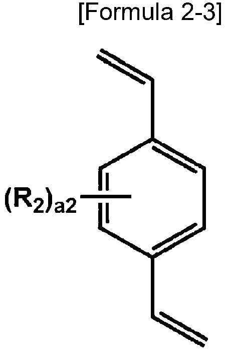

In Formulas 2-1 to 2-3,
R₂ is hydrogen or an alkyl group having 1 to 15 carbon atoms, and a2 is an integer of 1 to 4.

In an embodiment, in Formulas 2-1 to 2-3, R₂ may be hydrogen, a methyl group, an ethyl group, a propyl group, or a butyl group.

In an embodiment, the divinylbenzene-based monomer may be represented by Formula 2-2 or Formula 2-3.

In an embodiment, the phenol-based monomer may be represented by Formula 3.

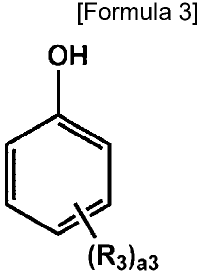

In Formula 3,
R₃ is hydrogen or an alkyl group having 1 to 15 carbon atoms, and a3 is an integer of 1 to 5.

In an embodiment, in Formula 3, R₃ may be hydrogen, a methyl group, an ethyl group, a propyl group, or a butyl group.

In an embodiment, the polymer may include at least one unit selected from among a unit represented by Formula 4-1, a unit represented by Formula 4-2, and a unit represented by Formula 4-3.

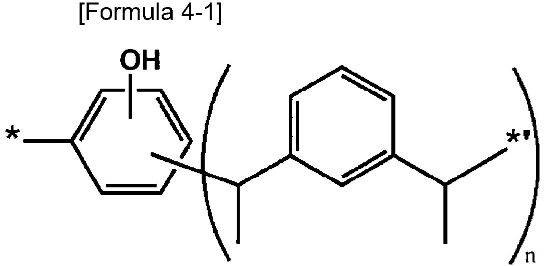

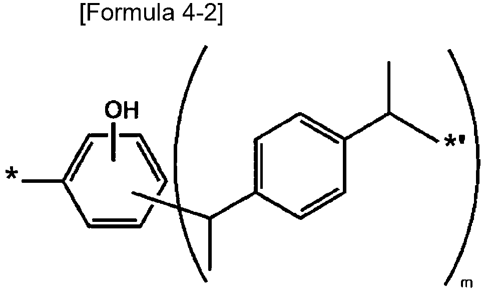

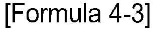

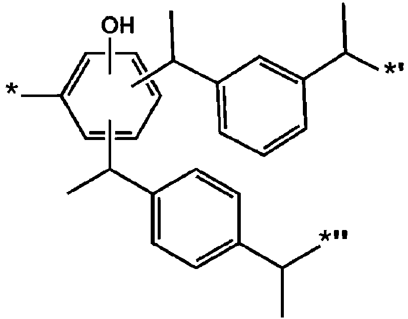

In Formulas 4-1 to 4-3,
n and m are each independently an integer of 1 or 2, and
*, *', and *" may each independently indicate a bonding site to an adjacent atom.

For example, in Formulas 4-1 to 4-3,
* may indicate a bonding site for bonding to an atom marked with *' or *" in an adjacent unit, and *' and *" may each independently indicate a bonding site for bonding to an atom marked with * in an adjacent unit.

In an embodiment, the polymer may include at least one unit selected from among units represented by Formulas 5-1 to 5-8.

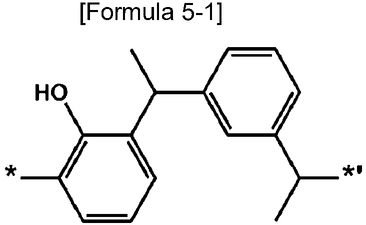

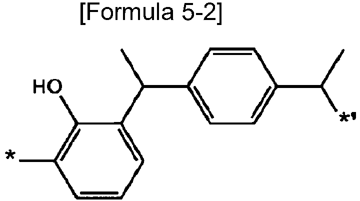

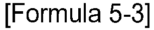

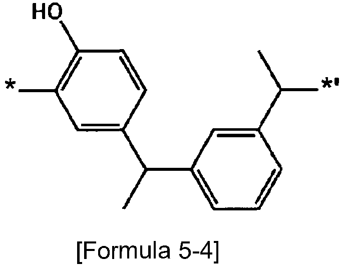

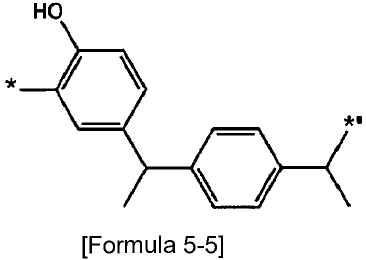

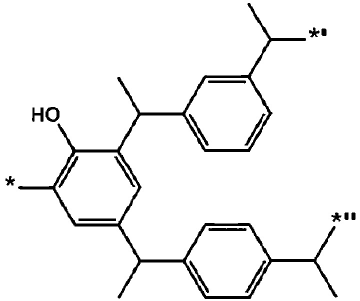

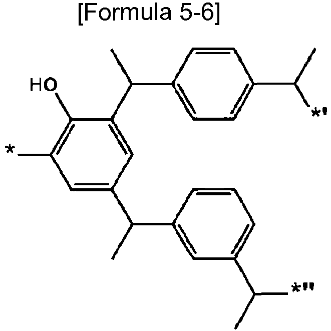

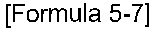

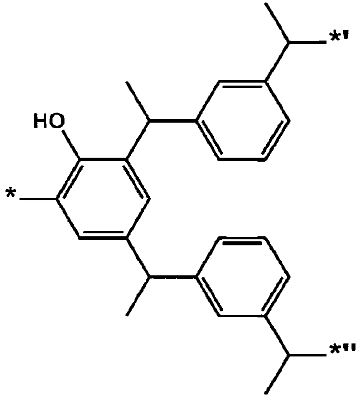

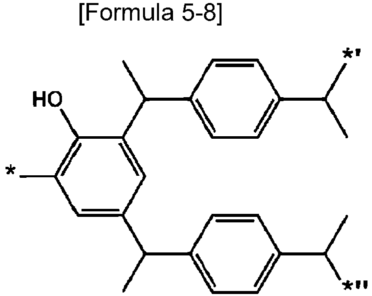

In Formulas 5-1 to 5-8,
* indicates a bonding site for bonding to an atom marked with *' or *" in an adjacent unit, and *' and *" each independently indicate a bonding site for bonding to an atom marked with * in an adjacent unit.

In an embodiment, the polymer may include Compound 1 or Compound 2 below.

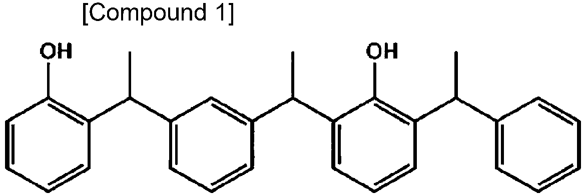

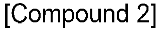

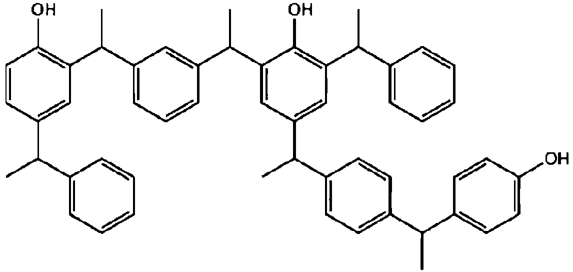

In an embodiment, in addition to Compound 1 or Compound 2, the polymer may further include a polymer including the unit (a) derived from the vinylbenzene-based monomer. For example, the polymer may further include a self-polymer of the vinylbenzene-based monomer. For example, the polymer may further include a self-polymer of the divinylbenzene-based monomer included in the vinylbenzene-based monomer.

In an embodiment, the vinylbenzene-based monomer may include a divinylbenzene-based monomer and a monovinylbenzene-based monomer.

For example, the monovinylbenzene-based monomer may be a monomer having a benzene substituted with one vinyl group. For example, the monovinylbenzene-based monomer may include vinylbenzene, methylvinylbenzene, ethylvinylbenzene, propylvinylbenzene, or butylvinylbenzene.

In an embodiment, in the polymer, a content of the unit (a) derived from the vinylbenzene-based monomer may range from 25 to 75 mol% based on a total number of moles of the polymer, and a content of the unit (b) derived from the phenol-based monomer may range from 25 to 75 mol% based on the total number of moles of the polymer.

In an embodiment, in the polymer, the content of the unit (a) derived from the vinylbenzene-based monomer may range from 30 to 75 mol%, 35 to 75 mol%, 40 to 75 mol%, 45 to 75 mol%, 30 to 70 mol%, 35 to 70 mol%, 40 to 70 mol%, 45 to 70 mol%, 35 to 65 mol%, 40 to 60 mol%, or 45 to 55 mol%, based on the total number of moles of the polymer.

In an embodiment, in the polymer, the content of the unit (b) derived from the phenol-based monomer may range from 30 to 75 mol%, 35 to 75 mol%, 40 to 75 mol%, 45 to 75 mol%, 30 to 70 mol%, 35 to 70 mol%, 40 to 70 mol%, 45 to 70 mol%, 35 to 65 mol%, 40 to 60 mol%, or 45 to 55 mol%, based on the total number of moles of the polymer.

In an embodiment, in the polymer, the content of the unit (a) derived from divinylbenzene included in the vinylbenzene-based monomer may range from 15 to 45 mol%, 15 to 40 mol%, 15 to 35 mol%, 15 to 30 mol%, 20 to 45 mol%, 20 to 40 mol%, 20 to 35 mol%, 20 to 30 mol%, or 25 to 35 mol%, based on the total number of moles of the polymer.

In an embodiment, the content of the unit (c) derived from the catechol-based compound in the polymer may be 2 mol% or less based on a total number of moles of the polymer. In the polymer, the content of the unit (c) derived from the catechol-based compound may be 1.5 mol% or less, 1 mol% or less, 0.5 mol% or less, 0.3 mol% or less, 0.2 mol% or less, or 0.15 mol% or less. For example, in the polymer, the content of the unit (c) derived from the catechol-based compound may range from 0.01 to 2 mol%, from 0.01 to 1 mol%, from 0.01 to 0.5 mol%, from 0.01 to 0.3 mol%, from 0.01 to 0.2 mol%, from 0.01 to 0.15 mol%, from 0.03 to 0.2 mol%, or from 0.03 to 0.15 mol%.

In an embodiment, the polymer may have a weight-average molecular weight (Mw) of 1,000 g/mol or less, a number-average molecular weight (Mn) of 700 g/mol or less, and a PDI of 1 to 6.

In an embodiment, the polymer may have a weight-average molecular weight (Mw) of 100 to 1,000 g/mol, 200 to 1,000 g/mol, 100 to 960 g/mol, 200 to 960 g/mol, or 200 to 900 g/mol.

In an embodiment, the polymer may have a number-average molecular weight (Mn) of 100 to 700 g/mol, 100 to 690 g/mol, 200 to 690 g/mol, 100 to 680 g/mol, 200 to 680 g/mol, or 200 to 650 g/mol.

In an embodiment, the polymer may have a PDI of 1 to 5, 1 to 3, 1 to 2, 1 to 1.5, or 1.2 to 1.5.

In an embodiment, the polymer may have a softening point of 60 °C or less. For example, the polymer may have a softening point of 50 °C or less or 40 °C or less.

For example, the softening point may be measured in accordance with ASTM D6090 by placing the synthesized resin in a Mettler ring and then raising the temperature from 30 °C to 100 °C at a heating rate of 2 °C/min using a Mettler softening point tester (METTLER TOLEDO DP70).

In an embodiment, the resin composition may be in a semi-solid state. For example, the semi-solid state refers to a state in which the material neither retains its shape like a solid nor flows like a liquid.

In an embodiment, the resin composition may be a resin composition for use in epoxy coatings. For example, the resin composition may be used in a coating composition including an epoxy polymer. For example, the resin composition may be used as a diluent for a coating composition including an epoxy polymer.

In another aspect, the present disclosure provides a coating composition including the resin composition.

In an embodiment, the coating composition may include an epoxy polymer and the resin composition described above.

In an embodiment, the epoxy polymer may be a bisphenol A-type epoxy polymer. For example, the bisphenol A-type epoxy polymer may be a polymerization product of bisphenol A and epichlorohydrin. For example, the resin composition may be a diluent.

In an embodiment, the content of the resin composition in the coating composition may range from 1 to 30 wt% based on the total weight of the coating composition.

In an embodiment, the coating composition may further include a pigment, a solvent, or an additive.

Examples of the pigment include an inorganic pigment, an organic pigment, and the like. The inorganic pigment may be one or more selected from the group consisting of chromates (chrome yellow, chrome vermilion), ferrocyanides (Prussian blue), sulfides (cadmium yellow, cadmium red), oxides (titanium oxide, Bengala, iron black, zinc oxide), sulfates (barium sulfate, lead sulfate), silicates (ultramarine, calcium silicate), carbonates (calcium carbonate, magnesium carbonate), phosphates (cobalt violet), metal powders (aluminum powder, bronze), and carbon materials (carbon black).

The organic pigment may be one or more selected from the group consisting of azo pigments (benzidine yellow, Hansa yellow, Vulcan orange, permanent red F5R, carmine 6B, lake red C, Cromophtal red, Cromophtal yellow) and phthalocyanine pigments (phthalocyanine blue, phthalocyanine green).

Examples of the solvent include aromatic hydrocarbon solvents, such as toluene, xylene, Solvesso #100, and Solvesso #150; aliphatic hydrocarbon solvents, such as hexane, heptane, octane, and decane; and ester solvents, such as methyl acetate, ethyl acetate, isopropyl acetate, butyl acetate, amyl acetate, ethyl formate, and butyl propionate. Examples of water-miscible organic solvents that may be used include alcohol solvents, such as methanol, ethanol, propanol, and butanol; ketone solvents, such as acetone, methyl ethyl ketone, and cyclohexanone; and glycol ether solvents, such as ethylene glycol (mono- or di-)methyl ether, ethylene glycol (mono- or di-)ethyl ether, ethylene glycol monopropyl ether, ethylene glycol monoisopropyl ether, ethylene glycol monobutyl ether, diethylene glycol (mono- or di-)methyl ether, diethylene glycol (mono- or di-)ethyl ether, diethylene glycol monoisopropyl ether, diethylene glycol monobutyl ether, triethylene glycol (mono- or di-)methyl ether, propylene glycol (mono- or di-)methyl ether, propylene glycol monopropyl ether, propylene glycol monobutyl ether, and dipropylene glycol (mono- or di-)methyl ether.

Examples of the additive include various slip agents, defoaming agents, leveling agents, and the like. As a curing aid, the additive may further include another curing agent, such as a melamine polymer, a benzoguanamine polymer, or an isocyanate polymer.

Hereinafter, the present disclosure will be described in further detail with reference to Examples. These Examples are provided solely for the purpose of illustrating the present disclosure in greater detail, and it will be apparent to those of ordinary skill in the art to which the present disclosure pertains that the scope of the present disclosure is not limited thereby.

### Example 1

A four-necked flask equipped with a stirrer, a condenser, and a thermometer was charged with 107 g (1.14 mol) of phenol and 0.15 g (0.0009 mol) of 4-tert-butylcatechol, and the mixture was heated to 80 °C. 0.82 g of boron trifluoride phenolate was added, and the mixture was stirred for 15 minutes. Thereafter, 37.5 g (0.29 mol) of a vinylbenzene monomer including divinylbenzene and ethylvinylbenzene was added dropwise at 80 °C over 30 minutes, and the reaction mixture was aged for 30 minutes. In the vinylbenzene monomer, the content of divinylbenzene was 57 wt%, and the content of ethylvinylbenzene was 40 wt%.

After the reaction mixture was heated to 130 °C, 0.82 g of boron trifluoride phenolate was added, and the mixture was stirred for 15 minutes. Thereafter, 37.5 g (0.29 mol) of the vinylbenzene monomer including divinylbenzene and ethylvinylbenzene was added dropwise at 130 °C over 30 minutes, and the reaction mixture was aged for 30 minutes. This dropwise-addition step, in which 37.5 g (0.29 mol) of the vinylbenzene monomer including divinylbenzene and ethylvinylbenzene was added over 30 minutes, was repeated two more times, so that the step was performed three times in total.

The total added amount of phenol was 107 g (1.14 mol), and the total added amount of the vinylbenzene monomer including divinylbenzene and ethylvinylbenzene was 150 g (1.15 mol).

Upon completion of the reaction, 257 g of xylene and 150 g of water were added to the reaction mixture, which was then heated to 60 °C and stirred for 30 minutes. After the mixture was allowed to stand for 20 minutes, the lower aqueous layer was separated and removed. This water-washing procedure was repeated twice, and washing was continued until the last separated lower aqueous layer had a pH of 5.5 to 7.5. Degassing was performed at 175 °C and a pressure of less than 40 torr to remove the solvent (xylene). The resin composition including the prepared polymer was obtained in a yield of 95 %.

### Examples 2 to 4

Resin compositions were prepared in the same manner as in Example 1, except that the added amount of 4-tert-butylcatechol was varied from that used in Example 1 as shown in Table 1 below.

### Comparative Example 1

A four-necked flask equipped with a stirrer, a condenser, and a thermometer was charged with 107 g (1.14 mol) of phenol and 85 g of xylene, and the mixture was heated to 80 °C. 0.82 g of boron trifluoride phenolate was added, and the mixture was stirred for 15 minutes. Thereafter, 150 g (1.15 mol) of a vinylbenzene monomer including divinylbenzene and ethylvinylbenzene was added dropwise at 80 °C over 4 hours, and the reaction mixture was aged for 1 hour.

Upon completion of the reaction, 172 g of xylene and 150 g of water were added to the reaction mixture, which was then heated to 60 °C and stirred for 30 minutes. After the mixture was allowed to stand for 20 minutes, the lower aqueous layer was separated and removed. This water-washing procedure was repeated twice, and washing was continued until the last separated lower aqueous layer had a pH of 5.5 to 7.5. Degassing was performed at 175 °C and a pressure of less than 40 torr to remove the solvent (xylene). The resin composition including the prepared polymer was obtained in a yield of 77 %.

### Comparative Example 2

PL-1000S (manufactured by Kolon Industries, Vis 1040 cps@25°C) was used instead of the polymer prepared in Comparative Example 1, and the coating-film performance was evaluated.

### Evaluation Example 1

The yield, softening point (SP), weight-average molecular weight (Mw), number-average molecular weight (Mn), and PDI of the resin compositions prepared according to Examples 1 to 4 and Comparative Example 1 were measured, and the results are set forth in Table 1 below.

The weight-average molecular weight (Mw), number-average molecular weight (Mn), and PDI of the resin compositions prepared according to Examples 1 to 4 and Comparative Example 1 were measured using an Agilent gel permeation chromatography (GPC) instrument. The columns used consisted of four columns packed with a styrenedivinylbenzene copolymer: HR 0.5 (Mw 0-1,000, 60 Å), HR₁ (Mw 100-5,000, 120 Å), HR₂ (Mw 500-20,000, 500 Å), and HR 4E (Mw 50-100,000, Mixture). Detection was performed using a refractive index (RI) detector. ULC/MS-grade THF was used as the eluent. Fifteen polystyrene standards (94 (phenol)-954,000) were used as external standards. Each sample was prepared by dissolving 0.02 g of resin in 5 mL of THF, and the resulting solution was injected into the GPC instrument for measurement.

The softening point was measured in accordance with ASTM D6090 by placing each resin composition prepared according to Examples 1 to 4 and Comparative Example 1 in a Mettler ring and then raising the temperature from 30 °C to 100 °C at a heating rate of 2 °C/min using a Mettler softening point tester (METTLER TOLEDO DP70).

**[Table 1]**

| | Phenol | VB | | Catechol | | | Molecular weight | | |
|---|---|---|---|---|---|---|---|---|---|
| | | Total added amount | DVB content in VB | | Yield (%) | Softening point (°C) | Mw (g/mol) | Mn (g/mol) | PDI |
| Example 1 | 107 g | 150 g | 85.5 g | 0.15 g | 95 | 45.5 | 774 | 572 | 1.35 |
| | 1.14 moles | 1.15 moles | 0.66 moles | 0.0009 moles | | | | | |
| | 49.6 mol% | 50.3 mol% | 28.7 mol% | 0.04 mol% | | | | | |
| Example 2 | 107 g | 150 g | 85.5 g | 0.3 g | 95 | 44.2 | 732 | 564 | 1.29 |
| | 1.14 moles | 1.15 moles | 0.66 moles | 0.0018 moles | | | | | |
| | 49.6 mol% | 50.3 mol% | 28.7 mol% | 0.08 mol% | | | | | |
| Example 3 | 107 g | 150 g | 85.5 g | 0.08 g | 85 | 50.5 | 953 | 670 | 1.42 |
| | 1.14 moles | 1.15 moles | 0.66 moles | 0.00048 moles | | | | | |
| | 49.6 mol% | 50.3 mol% | 28.7 mol% | 0.02 mol% | | | | | |
| Example 4 | 107 g | 150 g | 85.5 g | 0.75 g | 97 | 37.8 | 577 | 458 | 1.26 |
| | 1.14 moles | 1.15 moles | 0.66 moles | 0.0045 moles | | | | | |
| | 49.6 mol% | 50.2 mol% | 28.6 mol% | 0.2 mol% | | | | | |
| Comparative Example 1 | 107 g | 150 g | 85.5 g | - | 77 | 62.1 | 1090 | 696 | 1.56 |
| | 1.14 moles | 1.15 moles | 0.66 moles | | | | | | |
| | 49.7 mol% | 50.3 mol% | 28.7 mol% | | | | | | |

In Table 1, VB refers to a vinylbenzene monomer, and DVB refers to divinylbenzene.

Referring to Table 1, the catechol-containing resin compositions of Examples 1 to 4 exhibited higher yields than Comparative Example 1, and the suppression of self-polymerization allowed polymers having lower molecular weights to be more readily obtained.

### Evaluation Example 2: Evaluation of Coating Composition

### Formation of Coating Films

Liquid coating compositions were prepared using the resin compositions of Examples 1 to 4 and Comparative Examples 1 and 2, and coating films were formed.

A round plastic container was charged with 284 g of a liquid bisphenol A-type epoxy resin (KE-8128, commercially available from Kolon Industries), 28.4 g of the resin prepared or used in the corresponding Example or Comparative Example, 42 g of xylene, and 10 g of MIBK, and the contents were stirred. 0.6 g of a wetting agent was added, and 21.5 g of Bentone (Viscogen138) was gradually added while the mixture was dispersed under vigorous agitation using a high-speed mixer until no Bentone particles were visible. Subsequently, 117 g of TiO₂, 358 g of talc, 4.8 g of iron oxide black, and 113 g of barium sulfate (BaSO₄) were added. An additional 23 g of xylene and 25 g of MIBK were then added as solvents, and the mixture was stirred at 1,000 rpm for 15 minutes.

Glass beads were added to the stirred mixture in an amount of 1.5 cups based on a paper-cup measure. The mixture was dispersed using a shaker, and the particle size was measured every 20 minutes. Dispersion was terminated when the particle size was 40 µm or less. The glass beads were filtered off, thereby completing preparation of the base component.

A phenalkamine-type curing agent, LITE 2002 (AHEW = 104 g/eq), was mixed with the prepared base component at an epoxy-to-active-hydrogen equivalent ratio of 1:1. The resulting mixture was applied to glass and iron specimens to thicknesses of 75 µm and 120 µm, respectively, and fully dried at room temperature to form coating films.

The methods for evaluating coating performance are described below.
(1) Drying time (ASTM D5895): Drying time was determined using an automatic drying-time recorder by observing the trace formed on the coated surface over time. The measurement result, calculated as the average of the start and end times of tack-free drying (Stage 2) of the coating film, is set forth in Table 2 below.
(2) Adhesion (ASTM D4541, dolly test): After a dolly was attached to the surface of each coating film according to Examples 1 to 4 and Comparative Examples 1 and 2, the force required to detach the dolly was measured using a portable adhesion tester. The measurement results are set forth in Table 2 below.
(3) Flexural adhesion (flexibility) (ASTM E643, Erichsen cupping test): When each coating film according to Examples 1 to 4 and Comparative Examples 1 and 2 was progressively deformed by indentation (pressing and pushing in), resistance to cracking and resistance to delamination from the metal substrate were evaluated. The measurement results are set forth in Table 2 below.
(4) Impact resistance (ASTM D2794): Using a DuPont-type impact tester, a 1 kg weight was dropped onto each coating film according to Examples 1 to 4 and Comparative Examples 1 and 2 from progressively increasing heights, starting from a low height of 400 mm, and the height at which each coating film delaminated (cracked) was measured. The measurement results are set forth in Table 2 below.
(6) Solvent resistance and acid/alkali resistance: Xylene, a 5 % aqueous sulfuric acid solution, and a 5 % caustic soda solution were applied dropwise to each coating film according to Examples 1 to 4 and Comparative Examples 1 and 2, and the coating films were allowed to stand at room temperature for 72 hours. The degree of damage to each coating film was then visually evaluated. The degree of damage to each coating film was rated on a scale from 1 (Bad) to 10 (Good), where 1 indicates substantial damage and 10 indicates minimal damage. The measurement results are set forth in Table 2 below.

**[Table 2]**

| | Drying time (min, 25°C) | Adhesion (Mpa) | Flexibility (mm) | Impact resistance (1000N*mm) | Chemical resistance | |
|---|---|---|---|---|---|---|
| | | | | | Solvent resistance | Acid/base |
| Example 1 | 468 | 6.84 | 7.7 | 650 | 9 | 8/8 |
| Example 2 | 492 | 6.85 | 7.8 | 650 | 9 | 8/8 |
| Example 3 | 533 | 6.82 | 7.6 | 650 | 9 | 8/8 |
| Example 4 | 488 | 6.83 | 7.6 | 650 | 9 | 8/8 |
| Comparative Example 1 | 607 | 4.13 | 5.1 | 400 | 7 | 6/6 |
| Comparative Example 2 | 571 | 4.72 | 6.5 | 500 | 7 | 7/7 |

As shown in Table 2, the coating compositions including the resin compositions according to the Examples exhibited short drying times, and the resulting coating films exhibited improved adhesion, flexibility, impact resistance, and chemical resistance.

Accordingly, the resin composition according to the present disclosure may be used to readily prepare a coating composition that provides a reduced drying time and forms a coating film having excellent corrosion resistance, salt resistance, and color properties.

The foregoing Examples and Comparative Examples are presented by way of illustration of the present disclosure and are not to be construed as limiting the present disclosure. As those of ordinary skill in the art to which the present disclosure pertains will be able to practice the present disclosure with various modifications based thereon, the scope of protection of the present disclosure is to be defined by the appended claims.

## Claims

1. A resin composition comprising a polymer, the polymer comprising:
a unit (a) derived from a vinylbenzene-based monomer;
a unit (b) derived from a phenol-based monomer; and
a unit (c) derived from a catechol-based compound,
wherein the vinylbenzene-based monomer comprises a divinylbenzene-based monomer.

2. The resin composition of claim 1,
wherein the unit (c) derived from the catechol-based compound is disposed at a terminal end of the polymer.

3. The resin composition of claim 1,
wherein the catechol-based compound is represented by Formula 1: 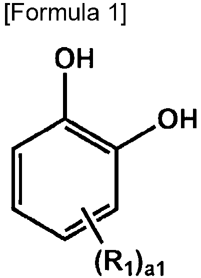
wherein, in Formula 1,
R₁ is hydrogen or an alkyl group having 1 to 15 carbon atoms, and a1 is an integer of 1 to 4.

4. The resin composition of claim 1,
wherein the catechol-based compound is represented by Formula 1-1 or Formula 1-2: 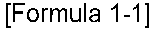 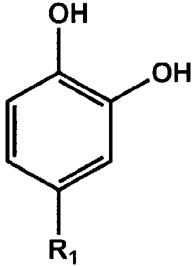 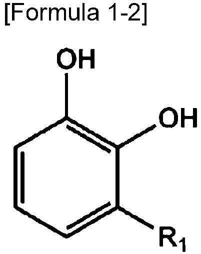
wherein R₁ is hydrogen or an alkyl group having 1 to 15 carbon atoms.

5. The resin composition of claim 1,
wherein the divinylbenzene-based monomer included in the vinylbenzene-based monomer is represented by any one of Formulas 2-1 to 2-3: 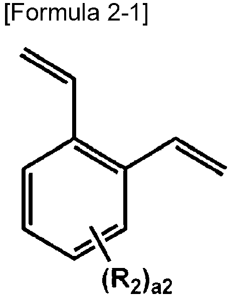 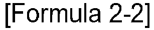 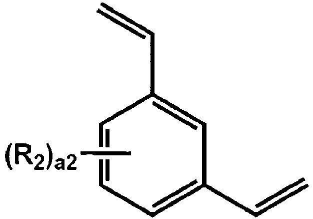 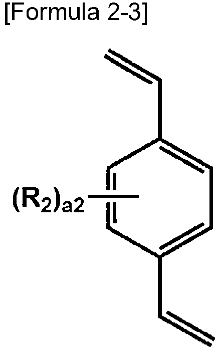
wherein, in Formulas 2-1 to 2-3,
R₂ is hydrogen or an alkyl group having 1 to 15 carbon atoms, and
a2 is an integer of 1 to 4.

6. The resin composition of claim 1,
wherein the phenol-based monomer is represented by Formula 3: 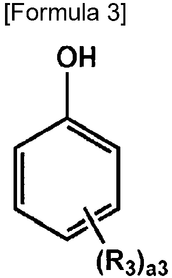
wherein, in Formula 3,
R₃ is hydrogen or an alkyl group having 1 to 15 carbon atoms, and
a3 is an integer of 1 to 5.

7. The resin composition of claim 1,
wherein the polymer comprises at least one unit selected from among a unit represented by Formula 4-1, a unit represented by Formula 4-2, and a unit represented by Formula 4-3: 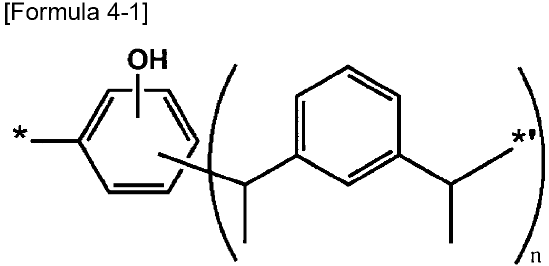 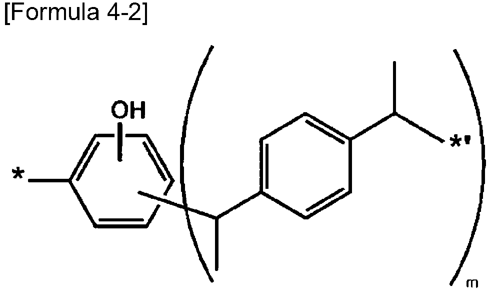 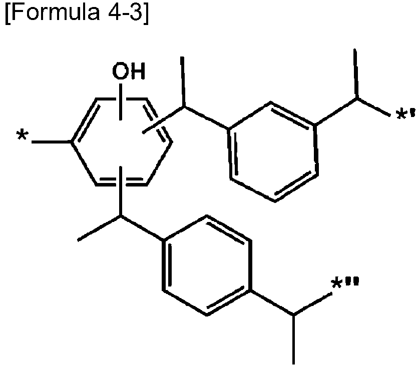
wherein, in Formulas 4-1 to 4-3,
n and m are each independently an integer of 1 or 2,
*, *', and *" each independently indicate a bonding site for bonding to an adjacent atom.

8. The resin composition of claim 1,
wherein the vinylbenzene-based monomer comprises the divinylbenzene-based monomer and a monovinylbenzene-based monomer.

9. The resin composition of claim 1,
wherein, based on a total number of moles of the polymer, a content of the unit (a) derived from the vinylbenzene-based monomer is 25 to 75 mol%, and
a content of the unit (b) derived from the phenol-based monomer is 25 to 75 mol%.

10. The resin composition of claim 1,
wherein a content of the unit (c) derived from the catechol-based compound is 2 mol% or less based on a total number of moles of the polymer.

11. The resin composition of claim 1,
wherein the polymer has a weight-average molecular weight of 1,000 g/mol or less,
the polymer has a number-average molecular weight of 700 g/mol or less, and
the polymer has a PDI of 1 to 6.

12. The resin composition of claim 1,
wherein the polymer has a softening point of 60 °C or less.

13. The resin composition of claim 1,
wherein the resin composition is in a semi-solid state.

14. The resin composition of claim 1,
wherein the resin composition is a diluent for epoxy coatings.

15. A coating composition comprising the resin composition according to claim 1.

16. The coating composition of claim 15,
further comprising an epoxy polymer.

17. The coating composition of claim 16,
wherein the epoxy polymer is a bisphenol A-type epoxy polymer.
